# EUROPEAN PATENT APPLICATION

(11) **EP 2 111 989 A2**
(43) Date of publication of application: **28.10.2009**
(21) Application number: 08022575.8
(22) Date of filing: 30.12.2008
(51) Int. Cl.: B41F 33/00

(54) **Ink print-through color value estimation method and apparatus, color value estimation method and apparatus taking ink print-though into consideration, target color setting method and apparatus taking ink print-through into consideration as well as controlling method and apparatus for printing press**

(30) Priority: 24.04.2008 JP 2008113984
(71) Applicant: Mitsubishi Heavy Industries, Ltd., Tokyo 108-8215 (JP)
(72) Inventor: Ozaki, Ikuo, Hiroshima-shi Hiroshima 733-8553 (JP); Takemoto, Shuichi, Mihara Hiroshima-ken, 729-0393 (JP)
(74) Representative: HOFFMANN EITLE

(57) **Abstract**

The present invention relates to a color value estimation method and apparatus for a printing press which make it possible to estimate a color value with high accuracy taking ink print-through of a sheet-formed printed matter which is printed on the opposite faces. A one-face side picture data and the other face side picture data to be printed on a printing sheet are acquired, and a basic print-through color value from the other face side to the one-face side is calculated from the other face side picture data using a correlation relationship with a basic color value where one-face side with respect to the other face side picture data is blank. Then, the basic print-through color value is corrected based on the degree of the basic color value to the other face side picture data and the one-face side picture data corresponding to the other face side picture data to calculate a print-through color value. Further, a one-face side basic color value where the other face side of the printing sheet is blank is calculated from the one-face side picture data using the correlation relationship with the basic color value where the one-face side with respect to the other face side picture data is blank. Then, a one-face side color value, which includes a value by ink print-through, to be detected by a colorimeter is estimated from the calculated print-through color value and one-face side basic color value.

## Description

### 1) Field of the Invention

The present invention relates to an inkprint-through (see-through) color value estimation method and apparatus for estimating a color value developed by a phenomenon (ink print-through) that the color of ink transferred to one face of a sheet-formed printed matter to be printed on the opposite faces thereof by a printing press permeates to the back face side of the printed matter, a color value estimation method and apparatus for a printing face (one face) taking such ink print-through into consideration, a target color setting method and apparatus taking such ink print-through into consideration, and a controlling method and apparatus for a printing press for which the target color setting method and apparatus are used.

### 2) Description of the Related Art

Where printing is carried out for both of the front and back faces of a sheet-formed printed matter (hereinafter referred to as printing sheet) such as printing paper, "ink print-through" which is a phenomenon that the color of ink transferred to one face of a printing sheet permeates to the back face side of the printing sheet sometimes occurs depending upon the material of the printing sheet. Such ink print-through as just described conspicuously occurs, for example, in a case of a thin printing sheet such as printing paper for newspaper, or in another case of printing wherein ink having a high permeability (in other words, a low viscosity) to a printing field is used such that the ink is quickly dried utilizing drying (permeation drying) by permeation of ink into a printing field like newspaper printing paper or the like.

Such ink print-through as described above is not preferable because a bad influence is had on the printing color tone of the front face. For example, in a technique (refer to Patent Document 1) for controlling the printing color tone developed by the inventors of the present application, appropriate control is disturbed, and such ink print-through as described is not preferable also from this point of view.

In particular, the printing color tone controlling technique disclosed in Patent Document 1 (Japanese Patent Laid-Open No. 2004-106523) is a technique wherein a color target (target color) of individual portions or an essential portion of a printing picture is set in advance and a color state of the printing picture is detected by a sensor during printing and then the ink supply is controlled so that the detected color state approaches the color target. However, if ink print-through occurs, then the sensor detects, in the detected color state, not only the color on the printing face of the detection target but also the color by ink print-through from the printing face on the back face side. Therefore, the detection value by the sensor exhibits a value increased by the color by the ink print-through from a value of the color of the printing face of the detection target, and it becomes impossible for the color state of the printing face to approach to the color target.

More particularly, according to the technique described, IRGB densities are used as an example of a color state and target values for the IRGB densities are set as a color target, and an IRGB densitometer is used as the sensor.

Then, during printing, IRGB values of a printing face of a controlling target are detected by the IRGB densitometer and solid density differences are calculated from IRGB values of the target values and detection values and then the ink supplying amounts are adjusted in response to the solid density differences.

If ink print-through occurs, then a detection value of the IRGB densitometer is detected as a value of the sum an IRGB value by the ink print-through and the IRGB value on the printing face of the controlling target, that is, a value higher than the actual IRGB value on the printing face of the controlling target (that is, a value which indicates a higher density). Therefore, in the ink supply controlling process based on the detected value, the ink supply is controlled to an amount smaller than an appropriate amount, and the color state on the printing face of the controlling target is displaced from the target color state.

In view of the subj ect described above, the inventors of the present application have proposed a technique for estimating ink print-through (refer to Patent Document 2, Japanese Patent Laid-Open No. 2006-341520).

According to a first technique (claim 1) disclosed in Patent Document 2, deciding that, regarding ink print-through to one face (front face) of a printing sheet, the difference between the tone value of a picture printed on the one-face (front face) side of the printing sheet and the tone value of a picture printed on the other-face (back face) side of the printing sheet corresponds to the ink print-through density, a corresponding relationship between the difference between the tone values of the pictures on both of the front and back faces of the printing sheet and the ink print-through density is calculated in advance, and ink print-through is estimated based on the difference between the tone values of the pictures on both of the front and back faces using the corresponding relationship.

Further, in a second technique (claim 2) disclosed in Patent Document 2, deciding that, regarding ink print-through to one face (front face) of a printing sheet, the tone value of a picture printed on the other face (back face) side of the printing sheet corresponds to the ink print-through density, a corresponding relationship between the tone value of the picture on the back face of the printing sheet and the ink print-through density is calculated in advance, and ink print-through is estimated based on the tone value of the picture on the back face using the corresponding relationship.

However, it has been turned out by further research and development by the inventors of the present application that the permeation color value from the back face varied depending upon the degree of the color value of the front face, and it has been discovered that it is difficult to estimate a high-accuracy print-through density based on the simple difference between the tone values of the front and back faces using the first technique disclosed in Patent Document 2. Further, also it has been discovered that, since the second technique disclosed in Patent Document 2 does not take the color value of the front face into consideration, naturally an accurate print-through density cannot be estimated.

If the decision accuracy of ink print-through is low in this manner, then, for example, a countermeasure that automatic control of the color tone of a printing picture is stopped and the controlling method is changed over to manual control, another countermeasure that a target color is changed so that the color of the picture on the back face to a printing face as a target becomes light or the like is applied occasionally. Then, if it is estimated that ink print-through occurs even in a case wherein ink print-through does not actually occur, then such a disadvantage that the burden on the operator increases due to manual control which originally is not required, another disadvantage that the back face is printed with lighter color than that originally required as a result of change of a target color which originally is not required or the like is invited.

The present invention has been made in view of such a subject as described above, and it is an object of the present invention to provide an ink print-through color value estimation method and apparatus for estimating a print-through color value of ink on a sheet-formed printed matter to be printed on the opposite faces thereof, a color value estimation method and apparatus taking ink print-through into consideration which can estimate a color value with high accuracy taking ink print-through into consideration, a target color setting method and apparatus taking ink print-through into consideration, and a controlling method and apparatus for a printing press utilizing such setting of a target color.

### SUMMARY OF THE INVENTION

In order to attain the object described above, according to an aspect of the present invention, there is provided an ink print-through color value estimation method for estimating an ink print-through color value of ink print-through which arises, on the one-face side of a printed matter, which has two faces to be printed by a printing press, from permeation of color of ink printed on the other-face side, comprising a picture data acquisition step of acquiring one-face side picture data of a picture printed on the one face side of the printed matter and the other-face side picture data of a picture printed on the other face side of the printed sheet, a basic print-through color value calculation step of calculating a one-face side basic print-through color value where the one face side of the printed matter is blank based on the other-face side picture data using a relationship of a simple print-through color correlation which is a relationship with a basic color value where the one face side is blank with respect to the other-face side picture data, and a print-through color value calculation step of correcting the basic print-through color value based on a degree of a basic color value of the other-face side picture data and the one-face side picture data at a position corresponding thereto to calculate a print-through color value.

It is to be noted here that the term "blank" is used to represent a "state wherein a face of a printed matter is not printed".

According to another aspect of the present invention, there is provided a color value estimation method taking ink print-through, which arises, on the one-face side of a printed matter, which has two faces to be printed by a printing press, from permeation of color of ink printed on the other-face side, into consideration, comprising a picture data acquisition step of acquiring one-face side picture data of a picture printed on the one face side of the printed matter and the other-face side picture data of a picture printed on the other face side of the printed sheet, a basic color value calculation step of calculating a one-face side basic color value where the other face side of the printed matter is blank based on the one-face side picture data using a relationship of a simple color correlation which is a relationship with a basic color value where the other face side is blank with respect to the one-face side picture data, a basic print-through color value calculation step of calculating a one-face side basic print-through color value where the one face side of the printed matter is blank based on the other-face side picture data using a relationship of a simple print-through color correlation which is a relationship with a basic color value where the one face side is blank with respect to the other-face side picture data, a print-through color value calculation step of correcting the basic print-through color value based on a degree of a basic color value of the other-face side picture data and the one-face side picture data at a position corresponding thereto to calculate a print-through color value, and a color value estimation step of estimating a one-face side color value to be detected as a value which includes ink print-through by a colorimeter from the one-face side basic color value calculated at the basic color value calculation step and the print-through color value calculated at the print-through color value calculation step.

It is to be noted that, while the "ink print-through color value" according to the ink print-through color value estimation method of the present invention and an ink print-through color value estimation apparatus hereinafter described is a "print-through color value when a picture on the back face penetrates to the front face", the "color value taking ink print-through into consideration" according to the color value estimation method and apparatus taking ink print-through into consideration of the present invention indicates a "color value of a picture on the front face which is influenced by this print-through color value".

Preferably, the color value estimation method taking ink print-through into consideration further comprises the steps, which are executed before the steps, of calculating a relationship of the simple color correlation, calculating a relationship of the simple print-through color correlation, and calculating a print-through permeation which is a correction coefficient for the basic print-through color value with respect to the other-face side picture data based on a degree of the basic color value to the one-face side picture data, and wherein, at the print-through color value calculation step, the basic print-through color value is used to convert the print-through permeation to calculate the print-through color value.

It is to be noted that the "the basic print-through color value is used to convert the print-through permeation to calculate the print-through color value" signifies the following. Although, if the basic print-through color value is densities of RGBI, the print-through color value can be calculated by multiplying the basic print-through color value by the print-through permeability, in the case of a uniform perception color coordinate such as a color coordinate Lab or a color coordinate Luv, since it is not of a linear space, the print-through color value is calculated by a process corresponding to multiplication although the multiplication cannot be called such multiplication as described above. Such "multiplying process" and "processing corresponding to multiplication" are represented as "used to convert".

In this instance, preferably the one-face side picture data and the other-face side picture data are plate making data of a picture.

It is to be noted that the plate making data here includes a gradation, a tone value, a scanning ratio and so forth.

Further, in this instance, the "scanning ratio" signifies an ink adhesion area ratio to a printing field on a line extending along a printing direction. For example, where ink entirely adheres to the face of a plate or the face of a printing field on a line extending along the printing direction while a printing drum rotates one rotation, the scanning ratio is 100 %.

Preferably, the relationship of the simple print-through color correlation is obtained by producing a first data acquiring printed matter wherein a picture is printed on the other face side of printing paper using a first measuring plate having a data acquisition picture composed of a plurality of picture tone values of individual colors or a scanning ratio and a combination of the picture tone values and the scanning ratio while the one face side is blank, measuring an ink print-through color of the data acquisition picture on the other face side of the first data acquiring printed matter from the one face side using the colorimeter, and associating the measurement data of the ink print-through with the picture tone values or scanning ratio of the data acquisition picture.

In this instance, preferably the print-through permeation is obtained by producing a second data acquiring printed matter wherein a picture is printed on the other face side of the printing paper using the first measuring plate having a first data acquisition picture composed of a plurality of picture tone values of individual colors or a scanning ratio and a combination of the picture tone values and the scanning ratio and a picture is printed on the one face side of the printing paper using a second measuring plate having a second data acquisition picture composed of a plurality of picture tone values of colors or a scanning ratio and a combination of the picture tone values and the scanning ratio for each region of the picture tone values or the scanning ratio of the first data acquisition picture, measuring, using the colorimeter, a color which is an ink print-through color of the first data acquisition picture from the other face side to the one face side of the second data acquiring printed matter and corresponds to each picture tone value or the scanning ratio on the one face side of the second data acquiring printed matter, and associating the picture tone values or the scanning ratio of the first measuring plate, the picture tone values or the scanning ratio of the second measuring plate at a position corresponding to the tone values or the scanning ratio of the first plate, and the measured data with one another.

Preferably, the relationship of the simple color correlation is obtained by measuring a color of the data acquisition picture from the other face side of the first data acquiring printed matter using the colorimeter, and associating the measurement data from the other face side with the picture tone values or the scanning ratio of the data acquisition picture.

According to a still further aspect of the present invention, there is provided a target color setting method taking ink print-through into consideration for setting a target color when, upon printing of both faces of a printed matter by a printing press, a target color which is a target value of a color tone for one face of the printed matter is set and a color of a picture immediately after printing is measured during operation by an online colorimeter provided on the printing press and then an ink supplying amount is controlled so that the measured color becomes the target color, comprising a step of carrying out the color value estimation method taking ink print-through into consideration, and a target color setting step of setting a color value taking ink print-through into consideration estimated by the color value estimation method taking ink print-through into consideration as the target color.

According to a yet further aspect of the present invention, there is provided a controlling method for a printing press for setting, upon printing of both faces of a printed matter by a printing press, a target color which is a target value of a color tone for one face of the printed matter, measuring a color of a picture immediately after printing during operation by an online colorimeter provided on the printing press and then controlling an ink supplying amount so that the measured color becomes the target color, comprising a step of controlling the ink supplying amount using the target color set by the target color setting method taking ink print-through into consideration as set forth in claim 8.

According to a yet further aspect of the present invention, there is provided an ink print-through color value estimation apparatus for estimating an ink print-through color value of ink print-through which arises, on the one-face side of a printed matter, which has two faces to be printed by a printing press, from permeation of color of ink printed on the other-face side, comprising a picture data acquisition section for acquiring one-face side picture data of a picture printed on the one face side of the printed matter and the other-face side picture data of a picture printed on the other face side of the printed sheet, a basic print-through color value calculation section for calculating a one-face side basic print-through color value where the one face side of the printed matter is blank based on the other-face side picture data using a relationship of a simple print-through color correlation which is a relationship with a basic color value where the one face side is blank with respect to the other-face side picture data, and a print-through color value calculation section for correcting the basic print-through color value based on a degree of a basic color value of the other-face side picture data and the one-face side picture data at a position corresponding thereto to calculate a print-through color value.

According to a yet further aspect of the present invention, there is provided a color value estimation apparatus taking ink print-through, which arises, on the one-face side of a printed matter, which has two faces to be printed by a printing press, from permeation of color of ink transferred on the other-face side, into consideration, comprising a picture data acquisition section for acquiring one-face side picture data of a picture printed on the one face side of the printed matter and the other-face side picture data of a picture printed on the other face side of the printed sheet, a basic color value calculation section for calculating a one-face side basic color value where the other face side of the printed matter is blank based on the one-face side picture data using a relationship of a simple color correlation which is a relationship with a basic color value where the other face side is blank with respect to the one-face side picture data, a basic print-through color value calculation section for calculating a one-face side basic print-through color value where the one face side of the printed matter is blank based on the other-face side picture data using a relationship of a simple print-through color correlation which is a relationship with a basic color value where the one face side is blank with respect to the other-face side picture data, a print-through color value calculation section for correcting the basic print-through color value based on a degree of a basic color value of the other-face side picture data and the one-face side picture data at a position corresponding thereto to calculate a print-through color value, and a color value estimation section for estimating a one-face side color value to be detected as a value which includes ink print-through by a colorimeter from the one-face side basic color value calculated by the basic color value calculation section and the print-through color value calculated by the print-through color value calculation section.

Preferably, the color value estimation apparatus taking ink print-through into consideration is configured such that a database is connected to the color value calculation section, and a relationship of the print-through color correlation, a relationship of the simple color correlation and a relationship of a print-through permeation which is a correction coefficient for the basic print-through color value with respect to the other-face side picture data with respect to a degree of the basic color value with respect to the one-face side picture data are stored.

In this instance, preferably the one-face side picture data and the other-face side picture data are plate making data of the picture.

According to a yet further aspect of the present invention, there is provided a target color setting apparatus taking ink print-through into consideration for setting a target color when, upon printing of both faces of a printed matter by a printing press, a target color which is a target value of a color tone for one face of the printed matter is set and a color of a picture immediately after printing is set during operation by an online colorimeter provided on the printing press and then an ink supplying amount is controlled so that the measured color becomes the target color, comprising the color value estimation apparatus taking ink print-through into consideration, and a target color setting section for setting a color value taking ink print-through estimated by the color value estimation method taking ink print-through into consideration into consideration as the target color.

According to a yet further aspect of the present invention, there is provided a controlling apparatus for a printing press for setting, upon printing of both faces of a printed matter by a printing press, a target color which is a target value of a color tone for one face of the printed matter, measuring a color of a picture immediately after printing during operation by an online colorimeter provided on the printing press and then controlling an ink supplying amount so that the measured color becomes the target color, wherein the ink supplying amount is controlled using the target color set by the target color setting apparatus taking ink print-through into consideration.

With the ink print-through color value estimation method and apparatus and the color value estimation method and apparatus taking ink print-through into consideration of the present invention, the one-face side basic print-through color value is calculated using a relationship of the simple print-through color correlation which is a relationship with the basic color value where the one-face side with respect to the other face side picture data is blank, and the one-face side basic print-through color value is corrected based on the degree of the basic color value to the other face side picture data and the one-face side picture data at a position corresponding to the other face side picture data to calculate the print-through color value to the one-face side. Therefore, the color value by print-through of ink from the back face side to the one-face side can be appropriately calculated as a value taking an influence on the one-face side picture into consideration.

Therefore, the one-face side color value appropriately taking ink print-through into consideration can be estimated from the one-face side basic color value and the print-through color value, and the color value to be detected as a value including ink print-through by the colorimeter can be estimated with high accuracy. Accordingly, the quality of a printedmatter can be enhanced while taking ink print-through into consideration.

For example, if a target color for automatically controlling the color state of printing is set utilizing such estimation of the color value taking ink print-through into consideration, then the target color can be set appropriately and automatic control of the color state can be carried out appropriately.

It is to be noted that, upon calculation of the print-through color value, the color value taking ink print-through into consideration can be estimated with certainty by calculating, in response to the degree of the basic color value to the one-face side picture data, the basic print-through color value which is a correction coefficient of the basic print-through color value with respect to the other face side picture data and using the print-through permeability to convert the basic print-through color value into the print-through color value.

The relationship of the simple print-through color correlation can be obtained easily and with certainty by producing a first data acquiring printed matter wherein a picture is printed on the other face side of printing paper using a first measuring plate having a data acquisition picture composed of a plurality of picture tone values of individual colors or a scanning ratio and a combination of the picture tone values and the scanning ratio while the one face side is blank, measuring an ink print-through color of the data acquisition picture on the other face side of the first data acquiring printed matter from the one face side using the colorimeter, and associating the measurement data of the ink print-through with the picture tone values or scanning ratio of the data acquisition picture.

Further, the print-through permeability can be obtained easily and with certainty by producing a second data acquiring printed matter wherein a picture is printed on the other face side of the printing paper using the first measuring plate having a first data acquisition picture composed of a plurality of picture tone values of individual colors or a scanning ratio and a combination of the picture tone values and the scanning ratio and a picture is printed on the one face side of the printing paper using a second measuring plate having a second data acquisition picture composed of a plurality of picture tone values of colors or a scanning ratio and a combination of the picture tone values and the scanning ratio for each region of the picture tone values or the scanning ratio of the first data acquisition picture, measuring, using the colorimeter, a color which is an ink print-through color of the first data acquisition picture from the other face side to the one face side of the second data acquiring printed matter and corresponds to each picture tone value or the scanning ratio on the one face side of the second data acquiring printed matter, and associating the picture tone values or the scanning ratio of the first measuring plate, the picture tone values or the scanning ratio of the second measuring plate at a position corresponding to the tone values or the scanning ratio of the first plate, and the measured data with one another.

Further, the relationship of the simple color correlation can be obtained easily and with certainty by measuring a color of the data acquisition picture from the other face side of the first data acquiring printed matter using the colorimeter, and associating the measurement data from the other face side with the picture tone values or the scanning ratio of the data acquisition picture.

The above and other objects, features and advantages of the present invention will become apparent from the following description and the appended claims, taken in conjunction with the accompanying drawings in which like parts or elements are denoted by like reference characters.

### BRIEF DESCRIPTION OF THE DRAWINGS

FIG. 1 is a block diagram illustrating a method and apparatus relating to estimation of a color value taking ink print-through into consideration, setting of a target color taking ink print-through into consideration and control of a printing press according to an embodiment of the present invention;
FIG. 2 is a diagrammatic view showing the printing press according to the embodiment of the present invention;
FIGS. 3(a), 3(b) and 3(c) are views illustrating setting of a corresponding relationship according to the embodiment of the present invention;
FIGS. 4(a), 4(b) and 4(c) are views illustrating a print-through permeability of a second corresponding relationship according to the embodiment of the present invention, and wherein FIG. 4(a) is a graph illustrating a characteristic of the print-through permeability and FIGS. 4(b) and 4(c) are views illustrating examples of a print-through color value taking the print-through permeability into consideration;
FIG. 5 is a flow chart illustrating an outline of an estimation method of a color value according to the embodiment of the present invention;
FIG. 6 is a flow chart illustrating an acquisition method of a first corresponding relationship and a simple color correlation of a print-through color correlation according to the estimation method of a color value according to the embodiment of the present invention;
FIG. 7 is a flow chart illustrating an acquisition method of the second corresponding relationship of a print-through color correlation according to the estimation method of a color value according to the embodiment of the present invention; and
FIG. 8 is a flow chart illustrating the estimation method of a color value according to the embodiment of the present invention.

### DESCRIPTION OF THE PREFERRED EMBODIMENT

In the following, an embodiment of the present invention is described with reference to the drawings.

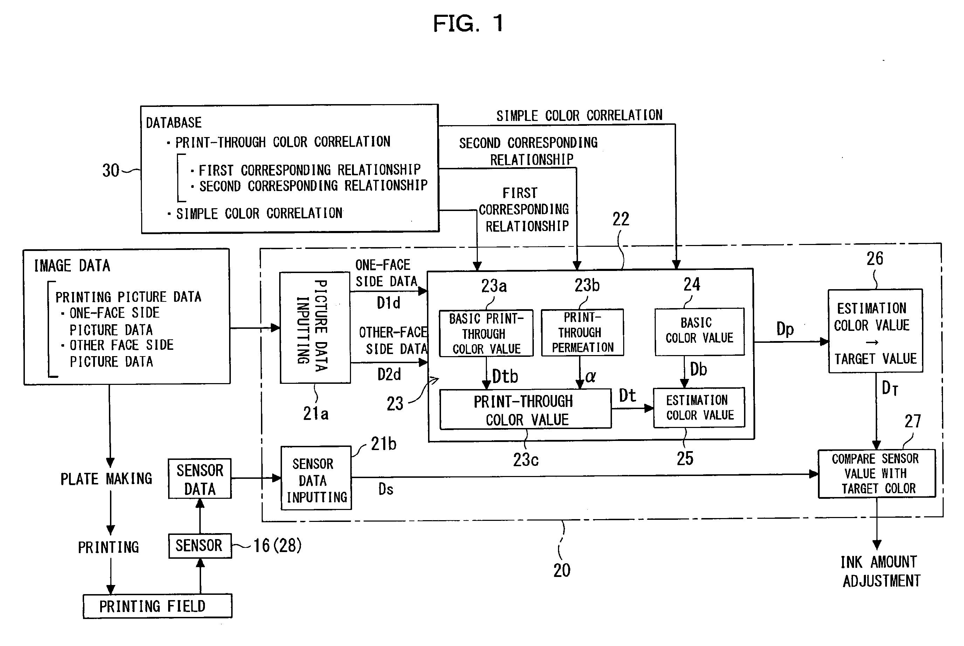

FIGS. 1 to 8 illustrate an ink print-through color value estimation method and apparatus, a color value estimation method and apparatus taking ink print-through into consideration, a target color setting method and apparatus and a controlling method and apparatus for a printing press according to an embodiment of the present invention, and the embodiment is described with reference to FIGS. 1 to 8.

### [Printing Press]

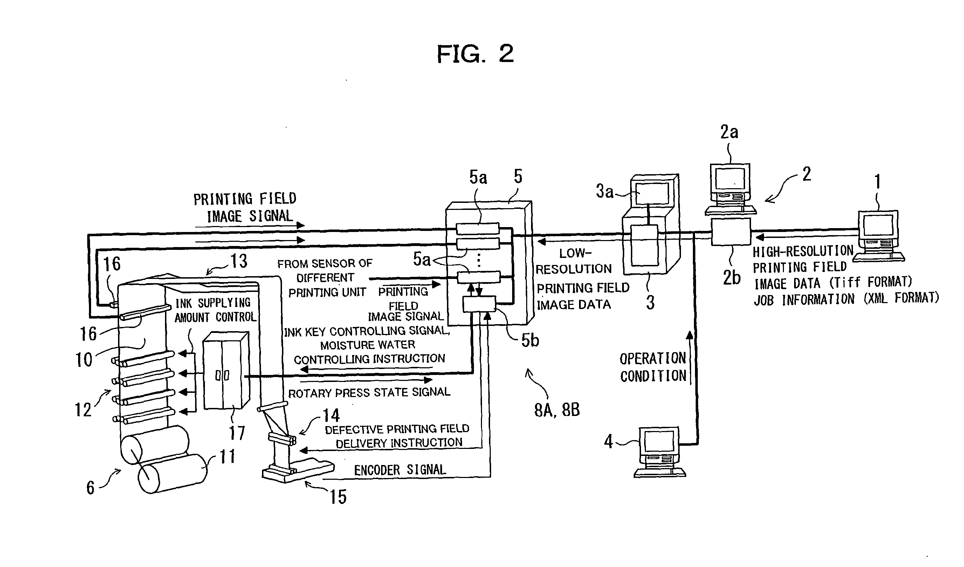

First, a printing press according to the present embodiment is described. In the present embodiment, a newspaper rotary press 6 is applied as the printing press as shown in FIG. 2.

The newspaper rotary press 6 is described. The newspaper rotary press 6 of the present embodiment is a multi-color perfecting printing press and is provided in a printing factory in various places, and includes a paper supplying station 11, an in-feed station (not shown), a printing station 12, a web-pass station 13, a folding machine 14 and a delivery station 15. Further, the newspaper rotary press 6 carries out printing on a web (continuous paper, hereinafter referred to sometimes as printing sheet) 10 supplied from the paper supplying station 11 by means of the printing station 12 and carries out cutting and folding of the web 10 by means of the folding machine 14 past the web-pass station 13 and then carries out delivery of the web 10 by means of the delivery station 15. The printing station 12 includes a color tone measurement sensor (colorimeter, color state detection section, color value detection section) 16 for detecting the actual value (actual color value) of the color value of each color which indicates a color state of a picture at a printing portion of the traveling web 10 and a rotary press controlling apparatus 17 for controlling the ink supplying amount (in particular, ink key) and moisture water in the printing station 12.

It is to be noted that the color value is a value which indicates a color state of a developed color, and, here, as an example, an IRGB densitometer for detecting the density of each of I, R, G and B as a color value is described as the color tone measurement sensor. As the color value, not only the density just described but also a color coordinate value such as Lab, a spectral value R (λ) or a like value can be used, and, as the color value detection section, various measuring instruments such as a color coordinate sensor and a spectral measuring instrument which can measure a color state of a developed color can be applied.

Further, such a newspaper rotary press 6 as described above includes an image server 2, an operation terminal personal computer 3, a CCS personal computer 4 and a quality controlling apparatus 5.

The image server 2 receives high-resolution printing field image data (image data) in the Tiff format and job information in the XML format transmitted as printing data from a CTP (Computer To Plate) server [or CTF (Computer To Film) server] 1 of a printing instruction department in the head office of a newspaper company which generally controls the printing factories at the various places and converts the printing field image data into data (image data; plate making data including the gradation, tone value, scanning ratio and so forth) of predetermined standards (for example, CIP 4 standards or standards for exclusive use of a printing company or the printing factories) which can be handled by printing presses in the individual printing factories. It is to be noted that, in each printing factory, though not shown, a printing plate is produced by CTP based on the printing field image data from the CTP server 1.

It is to be noted here that the "scanning ratio" signifies an ink adhesion area ratio to a printing field on a line extending along a printing direction. For example, where ink entirely adheres to the face of a plate or the face of a printing field on a line extending along the printing direction while a printing drum rotates one rotation, the scanning ratio is 100 %.

The operation terminal personal computer (or terminal personal computer of an image center) 3 carries out presetting of an ink supplying amount and control upon printing based on the printing field image data and the job information converted into the data of the predetermined standards (for example, standards for exclusive use of the printing company or the printing factory) by the image server (operation terminal) 2, and is used to allow the operator to carry out monitoring, issuance of an instruction and so forth when color tone control hereinafter described is carried out by ink supplying amount adjustment. Particularly, the operation terminal personal computer 3 includes a touch display unit 3a, and the operator can carry out issuance of an instruction and so forth while watching the screen of the touch display unit 3a.

The CCS personal computer 4 is provided in a management system on the rotary press side and is used to allow the image server 2 to determine a printing unit to which a page of the printing field image data (plate making data) converted into the above-described predetermined standard data is to be allocated, some other process of inputting of a driving condition and so forth.

The quality controlling apparatus 5 carries out automatic control in order to assure the printing quality upon printing and includes calculation apparatus 5a each for calculating a controlling amount for color tone automatic control of each printing press based on a color value signal of a printing field image outputted from the color tone sensor 16 of each printing press. The quality controlling apparatus 5 further includes an outputting apparatus 5b which receives controlling amount information from the calculation apparatus 5a, a state signal of a rotary press and an encoder signal from the delivery station 15 and outputs an ink key controlling signal, a moisture water controlling instruction and a defective printing field delivery instruction regarding the color tone automatic control to carry out various controlling processes. Particularly, the printing control according to the present embodiment is a function regarding automatic color tone control by ink supplying amount control through ink key control or discharging amount control of a digital ink pump from among the functions of the quality controlling apparatus 5.

As described above, the operation terminal personal computer 3 carries out various settings relating to control to be carried out by the quality controlling apparatus 5 based on the information from the image server 2. Therefore, a printing controlling apparatus (printing color tone controlling apparatus) 8A and a printing preparation apparatus 8B according to the present embodiment are configured from the image server 2, operation terminal personal computer 3 and quality controlling apparatus 5.

### [Color Value Estimation Apparatus]

The color value estimation apparatus according to the present embodiment estimates a color value taking ink print-through (see-through) into consideration, and includes, as shown in FIG. 1, as functional elements in the calculation apparatus 20, a picture data inputting section (picture data acquisitionmeans) 21a for acquiring picture data (one-face side picture data) to be printed on the one-face side of the web 10 and picture data (the other face side picture data) to be printed on the other face side of the web 10 and a color value estimation section 22 for estimating a one-face side color value to be detected as a value including ink print-through by a color tone measurement sensor 28 as a colorimeter based on the one-face side picture data and the other face side picture data as well as a required corresponding relationship recorded in a database 30.

It is to be noted that, as the calculation apparatus 20, the CCS personal computer 4 provided in the management system on the rotary press side may be utilized or a calculation apparatus of a server on the head office side of the newspaper company may be utilized.

Further, while the color tone measurement sensor 16 itself provided in the newspaper rotary press 6 is used as the color tone measurement sensor 28 here, not the color tone measurement sensor 16 but a different color tone measurement sensor whose detection characteristic (profile) is adjusted to same as that of the color tone measurement sensor 16 may be used as the color tone measurement sensor 28. Further, if the detection value can be adjusted by correction so as to be equivalent to that by the color tone measurement sensor 16, then a color tone measurement sensor having a detection characteristic (profile) different from that of the color tonemeasurement sensor 16 may be used.

One-face side picture data D1d and the other face side picture data D2d to be inputted to the picture data inputting section 21a can be obtained as image data (plate making data of the gradation, tone value, scanning ratio and so forth) from within printing data from the CTP server 1. Accordingly, such image data are inputted to the picture data inputting section 21a while they are used also for plate making, and a result of printing (printing field) by a printing plate produced by the plate making is measured by the colorimeter 28.

Further, the color value estimation section 22 includes, as functional elements, a print-through color value calculation section (print-through color value calculation means) 23 for calculating a print-through color value Dt from the other face side to the one-face side using a relationship (first corresponding relationship) of a simple print-through color correlation, a basic color value calculation section (basic color value calculation means) 24 for calculating a one-face side basic color value Db and a one-face side color value calculation section (color value estimation means) 25 for calculating (estimating) a one-face side color value Dp taking ink print-through into consideration from the calculated print-through color value Dt to the one-face side and one-face side basic color value Db.

It is to be noted that the ink print-through color value estimation apparatus according to the present embodiment is configured from the picture data inputting section (picture data acquisition means) 21a and the print-through color value calculation section (print-through color value calculation means) 23 included in the color value estimation section 22.

Of the sections mentioned, the print-through color value calculation section 23 is configured from a basic print-through color value calculation section 23a for calculating a basic print-through color value Dtb using the relationship of the simple print-through color correlation which is a relationship of the basic print-through color value Dtb to the other face side picture data D2d and the one-face side picture data D1d at a position corresponding to the picture data D2d, a print-through permeability calculation section 23b for calculating a permeability (print-through permeability) α of print-through from the other face side to the one-face side which indicates an influence, on the print-through color, of the degree of the basic color value with respect to the one-face side (front face side) picture data, in response to the one-face side picture data corresponding to the other-face side picture data, and a print-through color value correction section (multiplying section) 23c for using the print-through permeability α to convert the basic print-through color value Dtb corresponding to the one-face side picture data into the print-through color value Dt from the other face side to the one-face side (here, by multiplying the color value Dtb by the permeability α to calculate the print-through color value Dt).

Then, in the print-through color value calculation section 23, the basic print-through color value calculation section 23a calculates the basic print-through color value Dtb of print-through from the other face side to the one-face side in response to the other face side picture data D2d from the relationship (first corresponding relationship) of the simple print-through color correlation, and the print-through permeability calculation section 23b calculates the print-through permeability α from a relationship (second corresponding relationship) of a print-through permeability conduction correlation, and the print-through color value final calculation section (multiplying section) 23c multiplies the basic print-through color value Dtb corresponding to the one-face side picture data by the print-through permeability α to calculate the print-through color value Dt from the other face side to the one-face side.

The basic color value calculation section 24 calculates the one-face side basic color value Db where the other face side of the web 10 is blank ([blank] here signifies a non-printed state) based on the one-face side picture data D1d using a relationship of the simple color correlation which is a relationship between the picture data and the basic color value where the back face side with respect to the picture data is blank.

The one-face side color value calculation section 25 adds the print-through color value Dt to the one-face side basic color value Db to calculate (estimate) the one-face side color value Dp taking ink print-through into consideration.

### [Simple Print-Through Color Correlation, Print-Through Permeability Conduction Correlation and Simple Color Correlation]

Here, an acquisition method of the relationship (first corresponding relationship) of the simple print-through color correlation, the relationship (second corresponding relationship) of the print-through permeability conduction correlation and a relationship of a simple color correlation are described.

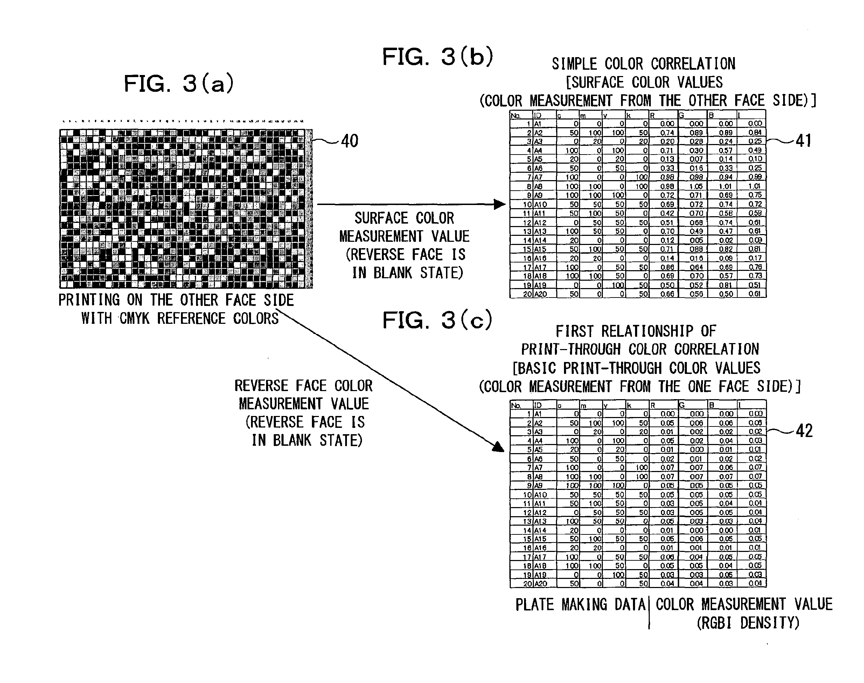

First, acquisition of the simple color correlation and the simple print-through color correlation is carried out by printing such a first data acquiring printed matter 40 as shown in FIG. 3(a) by the printing press 6. The first data acquiring printed matter 40 is a printed matter produced by printing a picture on the other face side, using, for each of the colors, a first measuring plate (not shown) having a data acquisition picture in the form of a set of patches (squares) of a plurality of picture tone values or scanning ratios (hereinafter referred to simply as "picture scanning ratios") and patches (squares) formed from combinations of various picture scanning ratios of different colors, while leaving the one-face side blank.

By measuring the color of this printing matter by means of the colorimeter 28 from the other face side which is printed, a great number of combinations of picture data (c, m, y, k) and color data (measurement data) (R, G, B, I) are obtained as seen in FIG. 3(b), and the combinations of the picture data (c, m, y, k) and the color data (R, G, B, I) indicate the simple color correlation. It is to be noted that, while combinations from No. 1 to No. 20 are shown in FIG. 3(b), actually a simple color correlation 41 is configured from a great number of combinations corresponding to the number of patches described above.

In particular, the simple color correlation indicates a corresponding relationship between the picture data (c, m, y, k) and color data (R, G, B, I) where the printing press 6 is used for printing under the condition that the back face is blank (there is no print-through).

If the simple color correlation is determined, then even if printing is not carried out actually, the basic color data Db (R, G, B, I) which are color data corresponding to the picture data (c, m, y, k) can be calculated from the picture data (c, m, y, k) using the simple color correlation.

On the other hand, also by measuring the printed matter by means of the colorimeter 28 from the one-face side which is not printed, a great number of combinations of the picture data (c, m, y, k) and the color data (measurement data) (R, G, B, I) are obtained as seen in FIG. 3(c), and the large number of combinations of the picture data (c, m, y, k) and the color data (R, G, B, I) indicate the first corresponding relationship of the print-through color correlation. It is to be noted that, while only the combinations from No. 1 to No. 20 are shown also in FIG. 3(c), actually the first corresponding relationship 42 of the print-through color correlation is configured from a great number of combinations corresponding to the number of patches described above.

In particular, the first corresponding relationship of the print-through color correlation indicates a corresponding relationship between the picture data (c, m, y, k) and the print-through color data (R, G, B, I) where the printing press 6 is used for printing under the condition that the front face is blank.

If the relationship (first corresponding relationship) of the simple print-through color correlation is calculated, then even if printing is not carried out actually, the basic print-through color data Dtb (R, G, B, I) which are print-through color data corresponding to the picture data (c, m, y, k) can be calculated from the picture data (c, m, y, k) using the first corresponding relationship.

On the other hand, the relationship (second corresponding relationship) of the print-through permeability conduction correlation is acquired using a second data acquisition printed matter (not shown) produced by printing a data acquisition picture which is, for example, such a set of a great number of patches (squares) as shown in FIG. 3(a) on the front face (the other face side) and printing the back face (one face side) without leaving the same blank. In this instance, printing of the back face (one-face side) of the second data acquisition printed matter is carried out by printing a second data acquisition picture configured from a plurality of picture scanning ratios of the individual colors and a combination of the picture scanning ratios at positions corresponding to the patches of the front face (the other face side).

Consequently, a very great number of combinations of the patches configured from the plural picture scanning ratios of the colors on the front face (the other face side) and the combinations of the picture scanning ratios and the patches configured from the plural picture scanning ratios of the colors on the back face (one-face side) and the combinations of the picture scanning ratios are formed. However, the printing of the back face (one-face side) of the second data acquisitionprintedmattermaybe carried out such that a number of the second data acquisition printed matters equal to the number of the plural picture scanning ratios of the colors and the combinations of the picture scanning ratios are produced as unique pictures of some of the picture scanning ratios of some of the colors or of a combination of such picture scanning ratios.

If the second data acquisition printed matter is used to carry out color measurement from the back face side (one-face side) of the second printed matter using the colorimeter 28, then the color which from the back face side (one-face side) of the second printed matter corresponds to the picture scanning ratios of the second data acquisition printed matter can be measured. From a result of the measurement, the influence of the ink color printed on the front face side (one-face side) where the print-through of the ink color printed on the back face side (the other face side) to the front face side (one-face side) is measured by means of the colorimeter 28 can be grasped.

As a result, it has been recognized that the print-through from the back face side (the other face side) measured by the colorimeter 28 has a significant influence on the printing on the front face side (one-face side), and most simply, it has been discovered that the influence of the print-through decreases as the color measurement value of the front face side (one-face side) increases. It is to be noted here that the total value of the colors of R, G, B and I is used as the color measurement value on the front face side (one-face side). Further, while the total value here is calculated by simply adding the color measurement values of the colors of R, G, B and I, particularly the color measurement values of the colors of R, G, B and I may be added after they are weighted in accordance with the degree of the influence of each color because there is a difference in the influence of the print-through on the magnitude of the color measurement value among the colors of R, G, B and I.

In the present embodiment, the influence of the color measurement value of the front face side (one-face side) on the print-through is given by the print-through permeability α. Naturally, for the influence of the color measurement value of the front face side (one-face side) on the print-through, not only the print-through permeability α but also a print-through subtraction correction amount which increases as the color measurement value on the front face side (one-face side) increases may be set and used.

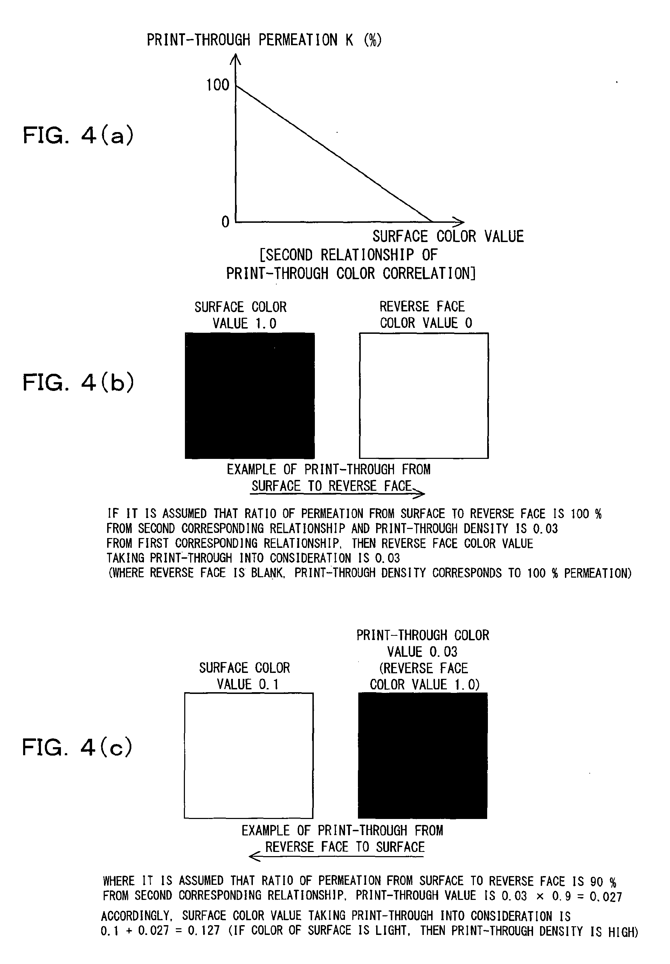

Further, in the present embodiment, the influence of the color measurement value of the front face side (one-face side) on the print-through is simplified such that the influence of the print-through linearly decreases as the color measurement value on the front face side (one-face side) increases, and the print-through permeability α is set to the color measurement value on the front face side (one-face side) as seen in FIG. 4(a). Also the print-through permeability α with respect to the color measurement value on the front face side (one-face side) is not limited to a linear corresponding relationship.

Accordingly, if the permeation from the front face to the back face is taken into consideration, for example, where the color measurement value (front face color value) on the front face is 1.0 and the color measurement value (reverse color value) on the back face is 0.0 as seen in FIG. 4(b), then the ratio (print-through permeability α) of permeation from the front face to the back face is 100 % in accordance with the second corresponding relationship [FIG. 4(a)] (where the back face is blank, the print-through permeability α from the front face to the back face is 100 %). Therefore, if the print-through density is 0.03 from the first corresponding relationship, then the print-through color measurement value measured from the back face side by the colorimeter 28 is 0.03 (=0.03 × 1.00).

Further, in this instance, since the value of the back face itself is 0, all of the color measurement values measured from the back face side by the colorimeter 28 are 0 + 0.03 = 0.03.

Further, if the permeation from the back face to the front face is considered where the color measurement value (front face color value) on the front face is 0.1 and the color measurement value (back face color value) on the back face is 1.0, for example, as shown in FIG. 4(c), then if the ratio (print-through permeability α) of permeation from the front face to the back face from the second corresponding relationship [FIG. 4(a)] is 90 %, then since the print-through density is 0.03 from the first corresponding relationship, the print-through color measurement value measured from the back face side by the colorimeter 28 is 0.027 (= 0.03 × 0.90).

Further, in this instance, since the value of the front faces themselves is 0.1, all of the color measurement values measured from the front face side by the colorimeter 28 are 0.1 + 0.027 = 0.127.

[Automatic Control of the Printing Color Tone]

In the present embodiment, the one-face side color value Dp taking ink print-through into consideration estimated in such a manner as described above is used for automatic control of the printing color tone carried out for assuring the printing quality upon printing by the quality controlling apparatus 5 described hereinabove.

In particular, a target color value setting section (target color value setting means) 26 is further provided as a functional element of the calculation apparatus 20, and the target color value setting section 26 sets the color value Dp taking ink print-through into consideration to a target color value D_{T}.

It is to be noted that the one-face side color value Dp and the target color value D_{T} are values representing the densities of I, R, G and B as color values and the target color value D_{T} can be represented particularly as target color values R_{T}, G_{T}, B_{T} and I_{T}.

Then, after printing is started, while color measurement data Ds by the colorimeter 16 is acquired by the sensor data inputting section 21b, the sensor value Ds and the target color value D_{T} are compared with each other by the comparison section 27 and the ink supplying amount is controlled so that the sensor value Ds approaches the target color value D_{T}.

### [Working, Effect]

The ink print-through color value estimation apparatus, color value estimation apparatus taking ink print-through into consideration, target color setting apparatus taking ink print-through into consideration and controlling apparatus for a printing press according to the embodiment of the present invention are configured in such a manner as described above. Therefore, estimation of an ink print-through color value, estimation of a color value taking ink print-through into consideration, setting of a target color taking ink print-through into consideration and control of a printing press can be carried out by such a technique (method) as described below.

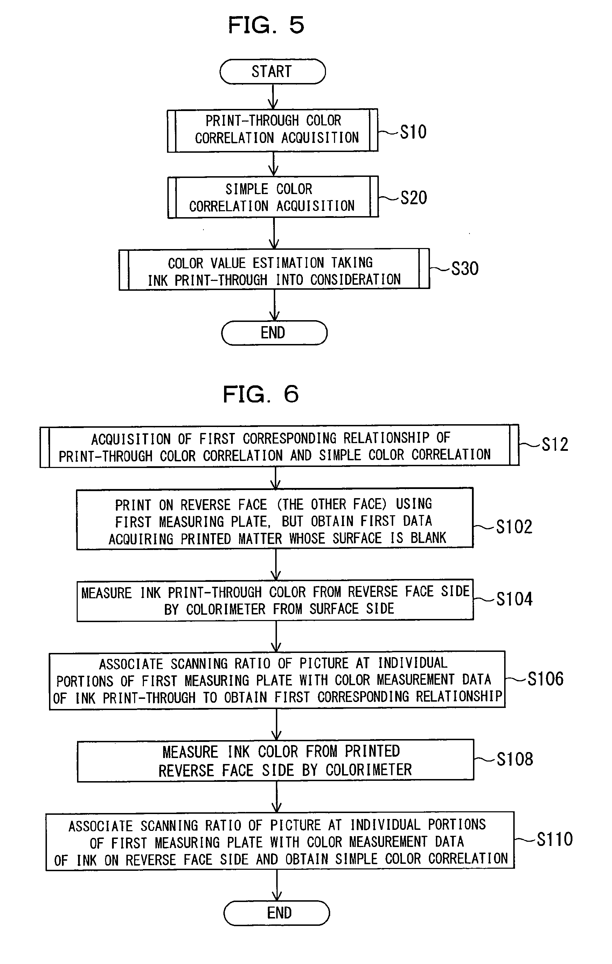

In particular, as shown in FIG. 5, a print-through color correlation is acquired first in advance (step S10) and then a simple color correlation is acquired (step S20), whereafter the print-through color correlation and the simple color correlation are recorded into the database 30. Then, a color value taking ink print-through into consideration is estimated using the print-through color correlation and the simple color correlation (step S30).

The acquisition (step S12) of the first corresponding relationship of the print-through color correlation and the simple color correlation which is part of the process at step S10 is carried out as described below. First, as shown in FIG. 6, printing is carried out only on the back face (the other face) of the web 10 using the first measuring plate so that the first data acquisition printed matter which is the web 10 whose front face is blank is obtained (step S102).

Then, the ink print-through color from the back face side is measured from the front face side of the web 10 by the colorimeter 28 (step S104). Consequently, the scanning ratio of a picture at each portion of the first measuring plate and the color measurement data of ink print-through are associated with each other to obtain the first corresponding relationship of the print-through color correlation, for example, as shown in FIG. 3(b) (step S106). Further, the ink color is measured from the back face side of the web 10 by the colorimeter 28 (step S108). Consequently, the scanning ratio of the picture at each portion of the first measuring plate and the color measurement data of ink are associated with each other to obtain the simple color correlation, for example, as shown in FIG. 3(c) (step S110).

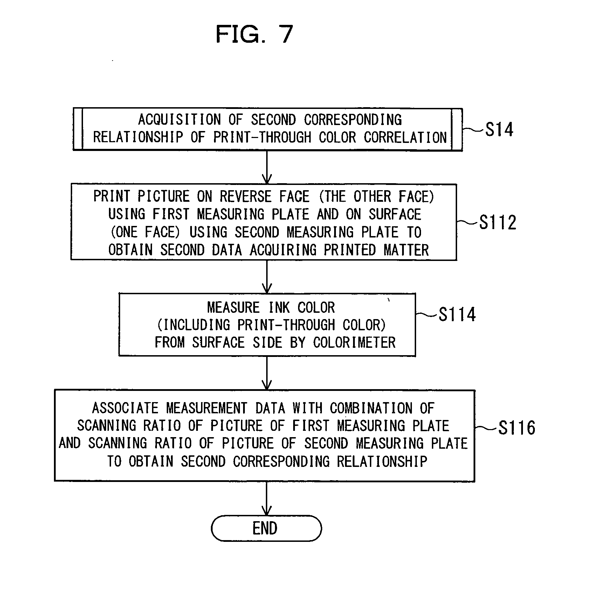

On the other hand, as regards the acquisition (step S14) of the second corresponding relationship of the print-through color correlation which is part of the process at step S10, a picture is printed on the back face (the other face) of the web 10 using the first measuring plate and is printed on the front face (one face) of the web 10 using the second measuring plate to obtain the second data acquisition printed matter as seen in FIG. 7 (step S112).

Here, the ink color (including the print-through color) is measured from the front face side of the web 10 by the colorimeter 28 (step S114). Then, the color measurement data are associated with a combination of the scanning ratio of the picture of the first measuring plate and the scanning ratio of the picture of the secondmeasuring plate to acquire the second corresponding relationship (step S116).

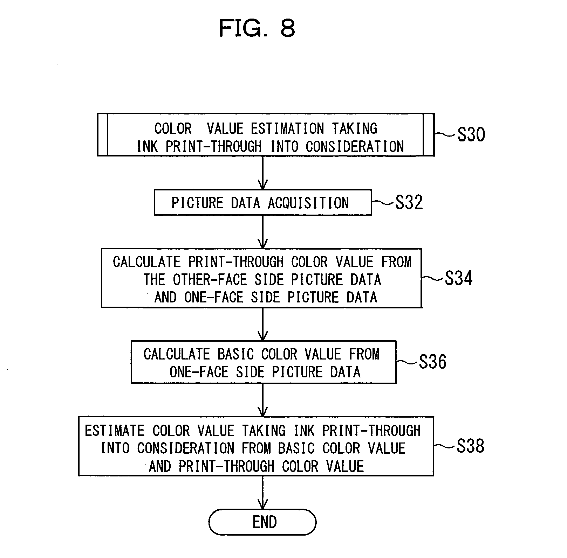

Then, for the color value estimation taking ink print-through into consideration(step S30), as seen in FIG. 8, picture data are acquired (step S32) and the print-through color value Dt is calculated from the other face side picture and one-face side picture data acquired in this manner (step S34). In other words, the ink print-through color value is estimated first.

More particularly, the basic print-through color value calculation section 23a uses the first corresponding relationship to calculate the basic print-through color value Dtb of print-through from the other face side to the one-face side in response to the other face side picture data D2d and the print-through permeability calculation section 23b uses the second corresponding relationship to calculate the permeability (print-through permeability) α of print-through from the other face side to the one-face side in response to the one-face side picture data corresponding to the other face side picture data. Then, the print-through color value final calculation section 23c multiplies the basic print-through color value Dtb corresponding to the one-face side picture data by the print-through permeability α to calculate the print-through color value Dt from the other face side to the one-face side.

Then, a basic color value is calculated from the one-face side picture data (step S36). In particular, the basic color value calculation section 24 uses the relationship of the simple color correlation to calculate the one-face side basic color value Db where the other face side of the web 10 is blank based on the one-face side picture data D1d.

Then, the color value taking ink print-through into consideration is estimated from the basic color value and the print-through color value (step S38). In particular, the one-face side color value calculation section 25 adds the print-through color value Dt to the one-face side basic color value Db to calculate (estimate) the one-face side color value Dp taking ink print-through into consideration.

The one-face side color value Dp estimated in such a manner as described above is set to the target color value D_{T} and printing is started. Then, while the color measurement data Ds by the colorimeter 16 is acquired by the sensor data inputting section 21b, the sensor value Ds and the target color value D_{T} are compared with each other by the comparison section 27 and the ink supplying amount is controlled so that the sensor value Ds approaches the target color value D_{T}.

In this manner, with the methods and apparatus, the print-through color value is calculated using the relationship of the print-through color correlation which is a relationship of the print-through color value to the other face side picture data and the one-face side picture data at a position corresponding to the other face side picture data. Therefore, the color value by print-through of ink from the back face side to the one-face side is calculated as a value taking an influence of the picture on the one-face side into consideration, and the one-face side color value appropriately taking ink print-through into consideration can be estimated.

In particular, while not only the density of ink on the back face but also the density of ink on the front face have an influence on the ink print-through, with the present methods and apparatus, since ink print-through is estimated taking not only the density of ink on the back face but also the density of ink on the front face into consideration and the color value taking ink print-through into consideration is calculated, a color value to be detected by the colorimeter can be estimated with high accuracy as a value including ink print-through.

Accordingly, it becomes possible to enhance the quality of a printed matter while taking ink print-through into consideration, and, for example, a target color can be set appropriately by setting of a target color taking ink print-through into consideration and automatic control of the color tone for quality management in a printing press can be suitably carried out.

### [Others]

While the embodiment of the present invention is described above, the embodiment of the present invention is not limited to the case described above.

For example, the color tone measurement sensor incorporated as the color state detection section on a line of a printing press is not limited to a sensor for measuring the density of IRGB but a sensor for measuring the density of RGB may be used as the color tone measurement sensor described above. Further, as described above, a color coordinate sensor for measuring a color coordinate value such as Lab, a spectral measuring instrument for measuring a spectral value R (λ) or the like may be used as the color tone measurement sensor. Furthermore, various sensors such as a sensor which analyzes a color value from image information using a camera or the like can be applied.

It is to be noted that, in the embodiment described above, the print-through color value is calculated by multiplying the basic print-through color value by the print-through permeability. Where the basic print-through color value is represented by the densities RGBI as in the present embodiment, since the basic print-through color value has a linear relationship with the print-through color value, the print-through color value can be calculated by multiplying the basic print-through color value by the print-through permeability in this manner. However, where the basic print-through color value is represented by a uniform perception color coordinate such as a color coordinate Lab, a coordinate Luv or the like, since the basic print-through color value does not have a linear relationship, such a multiplying process as described is not applicable. However, the print-through color value is calculated by carrying out a process corresponding to the multiplying process described above.

In any case, it is considered that a print-through permeability is used to convert a basic print-through color value into a print-through color value.

## Claims

1. An ink print-through color value estimation method for estimating an ink print-through color value of ink print-through which arises, on the one-face side of a printed matter, which has two faces to be printed by a printing press, from permeation of color of ink printed on the other-face side, comprising:
a picture data acquisition step of acquiring one-face side picture data of a picture printed on the one face side of the printed matter and the other-face side picture data of a picture printed on the other face side of the printed sheet;
a basic print-through color value calculation step of calculating a one-face side basic print-through color value where the one face side of the printed matter is blank based on the other-face side picture data using a relationship of a simple print-through color correlation which is a relationship with a basic color value where the one face side is blank with respect to the other-face side picture data; and
a print-through color value calculation step of correcting the basic print-through color value based on a degree of a basic color value of the other-face side picture data and the one-face side picture data at a position corresponding thereto to calculate a print-through color value.

2. A color value estimation method taking ink print-through, which arises, on the one-face side of a printed matter, which has two faces to be printed by a printing press, from permeation of color of ink printed on the other-face side, into consideration, comprising:
a picture data acquisition step of acquiring one-face side picture data of a picture printed on the one face side of the printed matter and the other-face side picture data of a picture printed on the other face side of the printed sheet;
a basic color value calculation step of calculating a one-face side basic color value where the other face side of the printed matter is blank based on the one-face side picture data using a relationship of a simple color correlation which is a relationship with a basic color value where the other face side is blank with respect to the one-face side picture data;
a basic print-through color value calculation step of calculating a one-face side basic print-through color value where the one face side of the printed matter is blank based on the other-face side picture data using a relationship of a simple print-through color correlation which is a relationship with a basic color value where the one face side is blank with respect to the other-face side picture data;
a print-through color value calculation step of correcting the basic print-through color value based on a degree of a basic color value of the other-face side picture data and the one-face side picture data at a position corresponding thereto to calculate a print-through color value; and
a color value estimation step of estimating a one-face side color value to be detected as a value which includes ink print-through by a colorimeter from the one-face side basic color value calculated at the basic color value calculation step and the print-through color value calculated at the print-through color value calculation step.

3. The color value estimation method taking ink print-through into consideration as set forth in claim 2, further comprising the steps, which are executed before the steps, of:
calculating a relationship of the simple color correlation;
calculating a relationship of the simple print-through color correlation; and
calculating a print-through permeation which is a correction coefficient for the basic print-through color value with respect to the other-face side picture data based on a degree of the basic color value to the one-face side picture data; and wherein,
at the print-through color value calculation step, the basic print-through color value is used to convert the print-through permeation to calculate the print-through color value.

4. The color value estimation method taking ink print-through into consideration as set forth in claim 3, wherein the one-face side picture data and the other-face side picture data are plate making data of a picture.

5. The color value estimation method taking ink print-through into consideration as set forth in claim 4, wherein the relationship of the simple print-through color correlation is obtained by:
producing a first data acquiring printed matter wherein a picture is printed on the other face side of printing paper using a first measuring plate having a data acquisition picture composed of a plurality of picture tone values of individual colors or a scanning ratio and a combination of the picture tone values and the scanning ratio while the one face side is blank;
measuring an ink print-through color of the data acquisition picture on the other face side of the first data acquiring printed matter from the one face side using the colorimeter; and
associating the measurement data of the ink print-through with the picture tone values or scanning ratio of the data acquisition picture.

6. The color value estimation method taking ink print-through into consideration as set forth in claim 5, wherein the print-through permeation is obtained by:
producing a second data acquiring printed matter wherein a picture is printed on the other face side of the printing paper using the first measuring plate having a first data acquisition picture composed of a plurality of picture tone values of individual colors or a scanning ratio and a combination of the picture tone values and the scanning ratio and a picture is printed on the one face side of the printing paper using a second measuring plate having a second data acquisition picture composed of a plurality of picture tone values of colors or a scanning ratio and a combination of the picture tone values and the scanning ratio for each region of the picture tone values or the scanning ratio of the first data acquisition picture;
measuring, using the colorimeter, a color which is an ink print-through color of the first data acquisition picture from the other face side to the one face side of the second data acquiring printed matter and corresponds to each picture tone value or the scanning ratio on the one face side of the second data acquiring printed matter; and
associating the picture tone values or the scanning ratio of the first measuring plate, the picture tone values or the scanning ratio of the second measuring plate at a position corresponding to the tone values or the scanning ratio of the first plate, and the measured data with one another.

7. The color value estimation method taking ink print-through into consideration as set forth in claim 5 or 6, wherein the relationship of the simple color correlation is obtained by:
measuring a color of the data acquisition picture from the other face side of the first data acquiring printed matter using the colorimeter; and
associating the measurement data from the other face side with the picture tone values or the scanning ratio of the data acquisition picture.

8. A target color setting method taking ink print-through into consideration for setting a target color when, upon printing of both faces of a printed matter by a printing press, a target color which is a target value of a color tone for one face of the printed matter is set and a color of a picture immediately after printing is measured during operation by an online colorimeter provided on the printing press and then an ink supplying amount is controlled so that the measured color becomes the target color, comprising:
a step of carrying out the color value estimation method taking ink print-through into consideration as set forth in any one of claims 2 to 7; and
a target color setting step of setting a color value taking ink print-through estimated by the color value estimation method taking ink print-through into consideration into consideration as the target color.

9. A controlling method for a printing press for setting, upon printing of both faces of a printed matter by a printing press, a target color which is a target value of a color tone for one face of the printed matter, measuring a color of a picture immediately after printing during operation by an online colorimeter provided on the printing press and then controlling an ink supplying amount so that the measured color becomes the target color, comprising:
a step of controlling the ink supplying amount using the target color set by the target color setting method taking ink print-through into consideration as set forth in claim 8.

10. An ink print-through color value estimation apparatus for estimating an ink print-through color value of ink print-through which arises, on the one-face side of a printed matter, which has two faces to be printed by a printing press, from permeation of color of ink printed on the other-face side, comprising:
a picture data acquisition section for acquiring one-face side picture data of a picture printed on the one face side of the printed matter and the other-face side picture data of a picture printed on the other face side of the printed sheet;
a basic print-through color value calculation section for calculating a one-face side basic print-through color value where the one face side of the printed matter is blank based on the other-face side picture data using a relationship of a simple print-through color correlation which is a relationship with a basic color value where the one face side is blank with respect to the other-face side picture data; and
a print-through color value calculation section for correcting the basic print-through color value based on a degree of a basic color value of the other-face side picture data and the one-face side picture data at a position corresponding thereto to calculate a print-through color value.

11. A color value estimation apparatus taking ink print-through, which arises, on the one-face side of a printed matter, which has two faces to be printed by a printing press, from permeation of color of ink printed on the other-face side, into consideration, comprising:
a picture data acquisition section for acquiring one-face side picture data of a picture printed on the one face side of the printed matter and the other-face side picture data of a picture printed on the other face side of the printed sheet;
a basic color value calculation section for calculating a one-face side basic color value where the other face side of the printed matter is blank based on the one-face side picture data using a relationship of a simple color correlation which is a relationship with a basic color value where the other face side is blank with respect to the one-face side picture data;
a basic print-through color value calculation section for calculating a one-face side basic print-through color value where the one face side of the printed matter is blank based on the other-face side picture data using a relationship of a simple print-through color correlation which is a relationship with a basic color value where the one face side is blank with respect to the other-face side picture data;
a print-through color value calculation section for correcting the basic print-through color value based on a degree of a basic color value of the other-face side picture data and the one-face side picture data at a position corresponding thereto to calculate a print-through color value; and
a color value estimation section for estimating a one-face side color value to be detected as a value which includes ink print-through by a colorimeter from the one-face side basic color value calculated by said basic color value calculation section and the print-through color value calculated by said print-through color value calculation section.

12. The color value estimation apparatus taking ink print-through into consideration as set forth in claim 11, wherein a database is connected to said color value calculation section, and a relationship of the print-through color correlation, a relationship of the simple color correlation and a relationship of a print-through permeation which is a correction coefficient for the basic print-through color value with respect to the other-face side picture data with respect to a degree of the basic color value with respect to the one-face side picture data are stored.

13. The color value estimation apparatus taking ink print-through into consideration as set forth in claim 12, wherein the one-face side picture data and the other-face side picture data are plate making data of the picture.

14. A target color setting apparatus taking ink print-through into consideration for setting a target color when, upon printing of both faces of a printed matter by a printing press, a target color which is a target value of a color tone for one face of the printed matter is set and a color of a picture immediately after printing is set during operation by an online colorimeter provided on the printing press and then an ink supplying amount is controlled so that the measured color becomes the target color, comprising:
the color value estimation apparatus taking ink print-through into consideration as set forth in any one of claims 11 to 13; and
a target color setting section for setting a color value taking ink print-through estimated by the color value estimation method taking ink print-through into consideration into consideration as the target color.

15. A controlling apparatus for a printing press for setting, upon printing of both faces of a printed matter by a printing press, a target color which is a target value of a color tone for one face of the printedmatter, measuring a color of a picture immediately after printing during operation by an online colorimeter provided on the printing press and then controlling an ink supplying amount so that the measured color becomes the target color, wherein:
the ink supplying amount is controlled using the target color set by the target color setting apparatus taking ink print-through into consideration as set forth in claim 14.
